Europäisches Patentamt

European Patent Office

Office européen des brevets

(19)

(11) Numéro de publication : **0 278 820 B1**

(12)

# FASCICULE DE BREVET EUROPEEN

(45) Date de publication du fascicule du brevet :
14.08.91 Bulletin 91/33

(51) Int. Cl.⁵ : **G01D 5/26**

(21) Numéro de dépôt : 88400126.4

(22) Date de dépôt : 21.01.88

(54) **Dispositif de détection à fibres optiques impliquant un contrôle de bon fonctionnement.**

(30) Priorité : 02.02.87 FR 8701195

(43) Date de publication de la demande :
17.08.88 Bulletin 88/33

(45) Mention de la délivrance du brevet :
14.08.91 Bulletin 91/33

(84) Etats contractants désignés :
AT BE CH DE ES FR GB GR IT LI LU NL SE

(56) Documents cités :
EP-A- 0 168 182
EP-A- 0 211 804
GB-A- 2 136 113
JOURNAL OF LIGHTWAVE TECHNOLOGY,
vol. LT-4, no. 7, juillet 1986, pages 926-932,
IEEE, New York, US ; P. SIXT et al.: "Passive
fiber Fabry-Perot filter for intensity-modulated
sensors referencing"

(73) Titulaire : PHOTONETICS
52 Avenue de l'Europe
F-78160 Marly le Roi (FR)

(72) Inventeur : Jeunhomme, Luc
5 Square Lavoisier
F-78330 Fontenay Le Fleury (FR)
Inventeur : Desforges, François Xavier
17 rue de l'Hermitage
F-78000 Versailles (FR)

(74) Mandataire : Thibon-Littaye, Annick
Cabinet A. THIBON-LITTAYE 11 rue de l'Etang
F-78160 Marly-le-Roi (FR)

**Description**

La présente invention a pour objet un dispositif de détection à fibres optiques impliquant un contrôle de bon fonctionnement. Elle propose un dispositif de construction particulièrement simple s'appliquant notamment à des processus de détection faisant intervenir plusieurs capteurs dont les informations sont transmises par un même système de fibres optiques entre les différents capteurs et un ensemble de traitement électronique commun.

On connaît déjà des dispositifs de détection à fibres optiques dans lesquels des fibres optiques sont utilisées pour transmettre un rayonnement lumineux depuis une source, constituée en général par une diode laser, jusqu'à un capteur, et pour conduire des informations lumineuses produites au niveau du capteur en retour jusqu'à un ensemble de traitement électronique de ces informations. Ces dispositifs sont réalisés sous de multiples variantes, notamment au niveau du capteur, suivant la nature des phénomènes que l'on cherche à détecter ou la grandeur que l'on cherche à mesurer. Mais parmi ces dispositifs, l'invention s'intéresse spécialement à ceux dans lesquels la transmission de la lumière incidente et le retour des informations du capteur s'effectuent par la même fibre optique et dans lesquels le capteur comporte une tête sensible fonctionnant par réflexion du rayonnement en bout d'une fibre optique.

L'emploi de tels capteurs dans des mesures industrielles impose souvent de disposer d'une référence à laquelle comparer le signal correspondant à la grandeur à mesurer de sorte que cette référence subisse les mêmes variations que le signal de mesure dans la transmission entre le capteur et l'ensemble de traitement électronique. Les solutions proposées à ce jour ne sont pas encore satisfaisantes. Elles consistent, soit à disposer deux fibres optiques différentes suivant le même trajet, l'une pour la tête de mesure sensible à la grandeur à mesurer, l'autre pour une tête identique également située dans le capteur, mais isolée de la grandeur à mesurer, soit à conduire par la même fibre optique des rayonnements de deux longueurs d'ondes différentes dont l'une seule est affectée par la grandeur à mesurer.

Le document **JOURNAL OF LIGHTWAVE TECHNOLOGY, vol. LT-4, no. 7, juillet 1986, pages 926-932, IEEE, New York, US** divulgue un dispositif de détection à fibres optiques fonctionnant en lumière incohérente, ayant également les caractéristiques qu'il comporte au moins un capteur comportant un élément sensible fonctionnant par réflexion de lumière en bout d'une fibre optique, et une ligne de transmission lumineuse par fibres optiques reliant ledit capteur à une source d'émission de signaux lumineux et à un ensemble de détection et de traitement des signaux produits par réflexion desdits signaux lumineux dans le capteur, que le capteur comporte un tronçon de fibre optique de longueur déterminée entre un connecteur intermédiaire produisant par réflexion un signal de référence et ledit élément sensible, ce dernier produisant un signal de mesure.

La solution proposée par la présente invention s'affranchit des effets qui peuvent encore subsister dans les solutions précédentes du fait des longueurs éventuellement différentes des fibres et des atténuations d'intensité ou des effets des courbures des fibres qui peuvent être différentes pour deux longueurs d'onde. Elle permet d'utiliser comme référence un signal produit au niveau du capteur à un intervalle de temps déterminé du signal de mesure et transmis par le même fibre optique dans la même longueur d'onde. Elle permet aussi, en combinaison ou non avec une telle référence, de concevoir le capteur et l'ensemble de traitement électronique associé, de manière à vérifier en permanence si le capteur est en état de fonctionnement.

Ainsi l'invention a pour objet un dispositif de détection à fibres optiques, comportant au moins un capteur comportant un élément sensible fonctionnant par réflexion de lumière en bout d'une fibre optique, et une ligne de transmission lumineuse par fibres optiques reliant ledit capteur à une source d'émission d'impulsions lumineuses périodiques et à un ensemble de détection et de traitement des signaux produits par réflexion desdites impulsions dans le capteur, le capteur comportant un tronçon de fibre optique de longueur déterminée entre un connecteur intermédiaire produisant par réflexion une impulsion d'état et ledit élément sensible, ce dernier produisant une impulsion de mesure qui est ainsi séparée de l'impulsion d'état d'au moins un intervalle de temps élémentaire, lesdits moyens électroniques étant adaptés à déceler l'état de fonctionnement du capteur par la présence ou l'absence de ladite impulsion d'état dans lesdits signaux.

Dans la mise en oeuvre pratique de l'invention la longueur de fibre séparant le connecteur intermédiaire de l'élément sensible est avantageusement choisie de sorte que la durée du retard séparant les impulsions correspondantes soit faible en regard de la période des impulsions émises par la source, et néanmoins supérieure à la durée des impulsions lumineuses de la source.

Le rôle du connecteur désigné comme un connecteur intermédiaire ci-dessus peut être joué par un connecteur disposé à l'entrée du capteur quand la ligne de transmission comporte un autre connecteur capable de produire une impulsion de réflexion par rapport à laquelle l'impulsion d'état se situe normalement à un instant déterminé, de sorte que l'absence de l'impulsion d'état à l'instant prévu signale un défaut de fonctionnement du capteur.

Mais dans un mode de réalisation préféré de l'invention le capteur comporte en outre un tronçon de fibre optique de longueur déterminée entre ledit connecteur intermédiaire et un connecteur d'entrée produisant, par réflexion, une impulsion d'entrée distinguée dans le temps de l'impulsion d'état et de l'impulsion de mesure.

Les moyens électroniques peuvent alors produire à la fois :

— d'une part une information de panne ou non sur la ligne de fibre optique transmettant les impulsions de la source au capteur suivant l'absence ou la présence de l'impulsion d'entrée dans les signaux reçus en retour ;

— d'autre part si le capteur est ou non branché en fonctionnement suivant la présence ou l'absence de l'impulsion d'état dans lesdits signaux.

Le fonctionnement des moyens électroniques est facilité si la longueur de fibre optique séparant le connecteur d'entrée du connecteur intermédiaire est choisie pour introduire, entre les impulsions correspondantes, le même intervalle de temps élémentaire qu'entre le connecteur intermédiaire et l'élément sensible, ou un intervalle de temps multiple de cet intervalle de temps élémentaire.

Suivant un autre mode de réalisation de l'invention l'information de branchement du capteur peut être donnée par un connecteur d'entrée ou un connecteur intermédiaire relié par des tronçons de fibre de longueurs différentes avec respectivement l'élément sensible et un élément de référence produisant une impulsion de référence insensible à la grandeur à mesurer qui se trouve ainsi séparée dans le temps de l'impulsion de mesure. Les longueurs des tronçons de fibre peuvent être notamment choisies pour introduire un intervalle de temps élémentaire entre l'impulsion de branchement et l'une des impulsions de référence et de mesure et un intervalle de temps élémentaire supplémentaire entre ces deux impulsions de référence et de mesure.

La présente invention a aussi pour objet un dispositif de détection à fibres optiques comportant plusieurs capteurs tels que définis ci-dessus, groupés pour utiliser la même source d'émission d'impulsions lumineuse et la même ligne de transmission par fibre optique conduisant les signaux des différents capteurs aux moyens de traitement électronique.

Dans un premier mode de réalisation d'un tel dispositif à plusieurs capteurs, il est prévu un coupleur qui peut être notamment du type des coupleurs étoile connus, pour relier la ligne de transmission séparément aux différents capteurs et entre ce coupleur et les connecteurs d'entrée aux différents capteurs, la transmission des impulsions de la source et celle des signaux en retour sont assurées par un tronçon de fibre optique qui présente des longueurs déterminées propres à chaque capteur introduisant entre une impulsion de réflexion produite par le coupleur et les impulsions des connecteurs d'entrée des capteurs des retards différents, chacun égal à un multiple de l'intervalle de temps élémentaire.

Les moyens de traitement électronique peuvent alors distinguer dans les signaux ceux qui proviennent des différents capteurs entre deux impulsions successives de la source et déterminer pour chacun s'il est branché ou non sur le coupleur, alors que les pannes en ligne se traduiront sur l'impulsion produite par un connecteur d'entrée du coupleur.

Dans l'exploitation de ces signaux l'invention s'applique aussi bien à des mesures impliquant pour un capteur déterminé, une comparaison de niveau d'intensité entre l'impulsion de mesure et l'impulsion d'état qu'à une simple détection de position ouverte ou fermée, par exemple, d'après la présence ou l'absence de l'impulsion de mesure. En effet, le connecteur intermédiaire du capteur peut avantageusement être calibré pour produire une impulsion de référence représentative de l'intensité optique véhiculée dans le tronçon de fibre, utilisable pour une mesure analogique d'intensité de l'impulsion de mesure.

Dans une autre forme de réalisation du dispositif de l'invention les longueurs de fibre de transmission, variables d'un capteur à l'autre, sont introduites à l'intérieur des capteurs eux-mêmes, entre un connecteur d'entrée fournissant l'information de panne éventuelle en ligne et un connecteur intermédiaire fournissant une information de branchement du capteur avec l'impulsion d'état ou de référence.

Dans un mode de réalisation particulier des moyens électroniques de traitement des signaux de chaque capteur, ceux-ci sont adaptés à produire à la fois :

— tout d'abord, une information de panne ou non du dispositif d'émission suivant la présence ou l'absence d'une impulsion réfléchie à l'entrée de ladite ligne ;

— puis, une information de panne ou non de ladite ligne suivant l'absence ou la présence d'une impulsion réfléchie à l'extrémité de ladite ligne, par un connecteur d'entrée du coupleur ;

— une information de panne ou non du coupleur suivant l'absence ou la présence d'une impulsion réfléchie par un connecteur d'entrée du coupleur;

— enfin, une information de panne ou non du capteur, panne pouvant aussi être le non-raccordement du capteur au coupleur suivant l'absence ou la présence d'une impulsion d'état réfléchie par ledit connecteur intermédiaire ou d'une impulsion de référence réfléchie par ledit connecteur intermédiaire ou par ledit élément de référence.

En fonction de tout ce qui précède, on observera que la détection et l'exploitation des signaux s'effectuent en lumière incohérente : elles ne demandent aucune modulation en longueurs d'ondes, les différentes impulsions étant examinées dans leur répartition temporelle.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

— la figure 1 représente schématiquement un dispositif de détection selon l'invention à plusieurs capteurs. Elle illustre également la description des principales fonctions de traitement électronique des signaux produits par les capteurs ;

— la figure 2 illustre schématiquement la constitution d'un capteur utilisable dans le dispositif de la figure 1 ;

— la figure 3 représente schématiquement la composition de signaux reçus à partir d'un capteur selon la figure 2 ;

— la figure 4 illustre schématiquement la constitution d'un capteur selon l'invention, dans un autre mode de réalisation utilisable dans le dispositif de la figure 1 ;

— la figure 5 représente schématiquement la composition de signaux reçus à partir d'un capteur selon la figure 4 ;

— la figure 6 illustre schématiquement la constitution d'un capteur unitaire selon l'invention dans un autre mode de réalisation également utilisable dans un dispositif à plusieurs capteurs de la figure 1,

— la figure 7 donne un schéma de traitement logique des signaux.

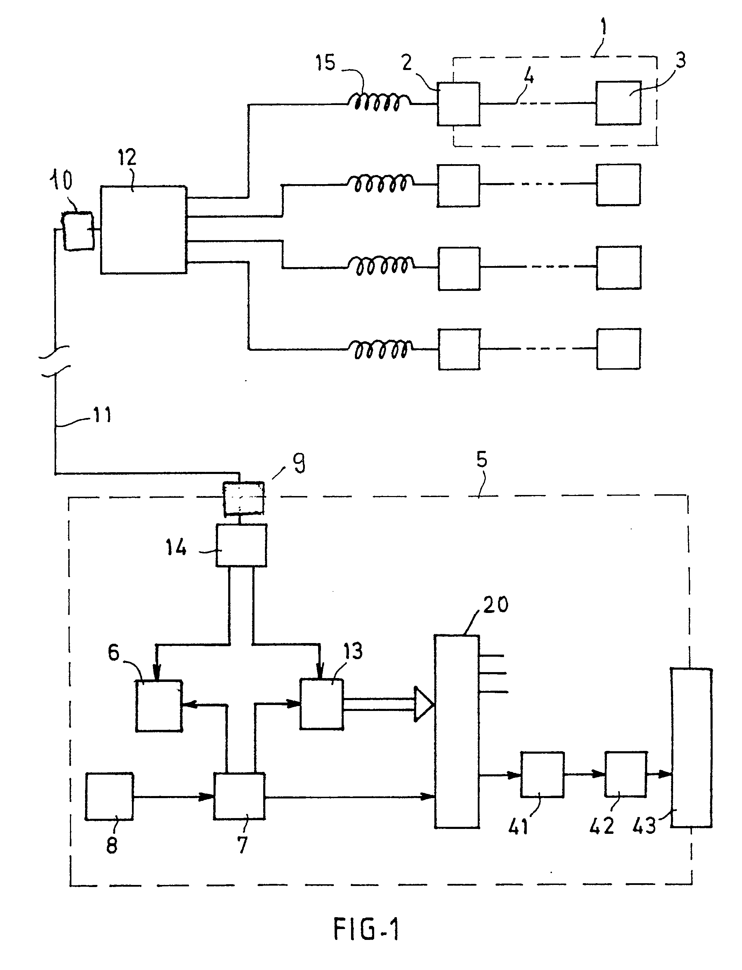

Le dispositif de la figure 1 comporte plusieurs capteurs à fibres optiques tels que 1, dont le nombre peut être quelconque. Il peut s'agir de capteurs de position, de pression, de température, de capteurs de détection en "tout ou rien", ou de tous types de capteurs comportant un élément sensible de construction classique fonctionnant par réflexion de lumière en bout d'une fibre optique. La réflexion peut être par exemple nulle ou totale suivant la position d'un dispositif réfléchissant incorporé dans une tête sensible contenant l'élément sensible, le dispositif réfléchissant étant notamment un miroir ou un rétro-réflecteur. Dans d'autres cas, le taux de réflexion peut varier en fonction d'une grandeur à mesurer, telle qu'une distance. On voit cependant que chaque capteur 1 comporte au moins un connecteur d'entrée 2 et une tête sensible ou élément sensible 3, qui sont reliés ensemble par un tronçon de fibre optique 4.

A distance de ces capteurs, le dispositif comporte un boîtier de commande et de mesure 5, dans lequel on trouve une source lumineuse 6, constituée par une diode laser qui émet des impulsions de rayonnement à des intervalles de temps périodiques sous la commande d'un compteur 7 associé à une horloge 8.

Ces impulsions lumineuses incidentes sont émises à l'extrémité d'une ligne de transmission par fibres optiques 11 qui les fait parvenir aux différents capteurs 1 par l'intermédiaire d'un coupleur étoile 12. La ligne de transmission 11 est unique. Elle conduit d'une part les impulsions incidentes jusqu'au coupleur 12, d'autre part les signaux optiques revenant par le coupleur 12 après réflexion dans les différents capteurs. Cependant, cette ligne peut suivre un trajet de forme quelconque et de longueur quelconque et comporter tout connecteur nécessaire pour relier des fibres successives entre elles suivant ce trajet. Aux extrémités de la ligne 11 se trouvent un connecteur 9 de liaison avec le boîtier 5 et un connecteur 10 de liaison avec le coupleur étoile 12.

Les signaux optiques transmis en retour depuis les capteurs sont détectés et traduits en signaux électriques par une diode de réception 13. Celle-ci est incorporée dans le boîtier 5, qui contient aussi un coupleur bidirectionnel 14 reliant la ligne 11 aux diodes 6 et 13.

Entre le coupleur 12 et chacun des capteurs 1, la transmission des rayonnements lumineux est assurée par un tronçon de fibre optique 15 de longueur déterminée. Les longueurs des différents tronçons 15 associés aux différents capteurs sont différentes les uns des autres, de manière à introduire un retard propre à chaque capteur entre l'impulsion de retour réfléchie par le connecteur d'entrée 10 du coupleur 12 et les impulsions produites au niveau des capteurs eux-mêmes. A titre d'exemple, pour une source produisant des impulsions de 20 nanosecondes toutes les millisecondes et des capteurs dont les signaux s'étendent sur 100 nanosecondes au maximum, on peut choisir pour les tronçons 15 des longueurs de fibres imposant un retard de transmission de 200 nanosecondes d'un capteur à l'autre, de sorte que les impulsions réfléchies soient distinguées dans le temps dans le cumul des signaux des capteurs revenant à la diode de réception 13.

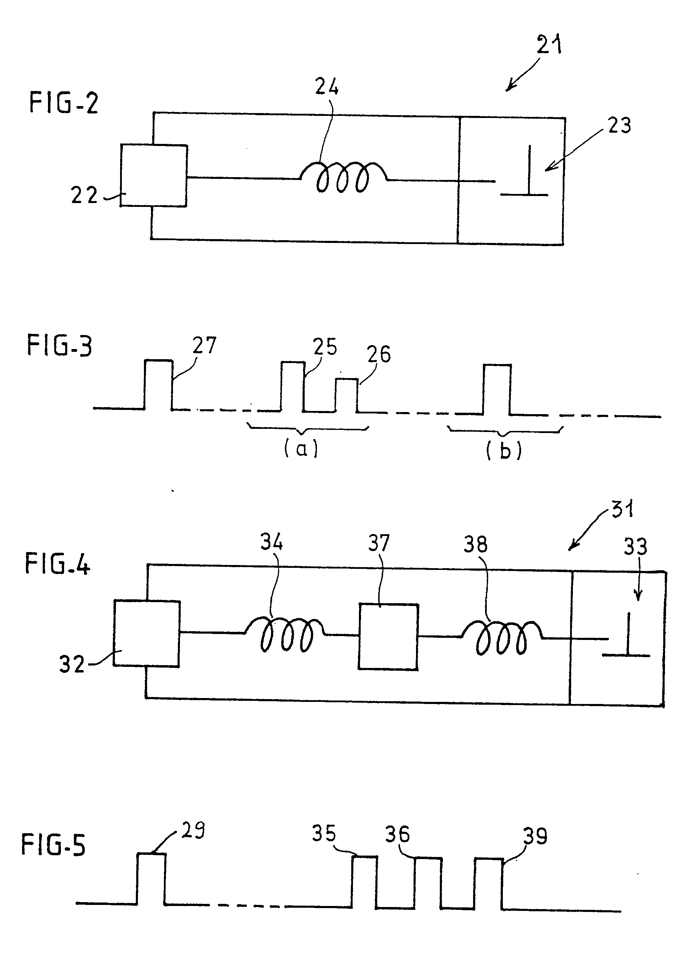

En première variante de réalisation, on considère que les capteurs sont du type de celui qui à été représenté sur la figure 2. Chaque capteur 21 comporte donc un connecteur d'entrée 22, qui se branche en bout d'un tronçon 15, et un élément sensible 23. Le connecteur 22 et l'élément sensible 23 sont reliés ensemble par un tronçon de fibre optique 24 dont la longueur est déterminée pour que dans les signaux produits, l'impulsion de réflexion de la tête sensible soit distinguée de l'impulsion de réflexion produite au niveau du connecteur 22 et séparée de celle-ci d'un intervalle de temps dit élémentaire qui reste nettement inférieur aux retards relatifs introduits par les tronçons 15.

Les signaux analysés par les circuits de traitement électronique contenus dans le boîtier 5 sont alors conformes à ce qui est illustré par la figure 3. Chaque connecteur d'entrée à un capteur joue le rôle d'un connecteur intermédiaire de détection de panne. A titre d'exemple, un signal (a) représenté montre que la ligne 15 du capteur correspondant est bien raccordée au coupleur étoile 12, car il contient une impulsion d'état ou de référence 25, provenant du connecteur 22, après une impulsion 27 qui provient du connecteur 10 existant au niveau du coupleur. En effet, si la ligne 15 correspondant à ce capteur était cassée, l'impulsion 25 serait absente, ou bien elle se produirait à un instant anormal. Le signal (a) est supposé suivi d'un signal (b) qui témoigne également que le capteur correspondant est correctement branché, pour une longueur différente du tronçon qui le raccorde au coupleur.

L'impulsion d'un capteur "tout ou rien" se traduit par le présence (signal a) ou l'absence (signal b) d'une impulsion 26 à la suite de l'impulsion 25. Eventuellement, un traitement analogique des signaux établissant le rapport, entre les intensités réfléchies dans l'impulsion 26 et l'impulsion 25 permet de déterminer une grandeur à mesurer par la tête sensible en référence à l'impulsion produite par le connecteur 22, celui-ci étant convenablement calibré à cet effet.

La figure 4 représente un autre capteur selon l'invention qui peut être avantageusement utilisé, soit en capteur unitaire, soit pour constituer les différents capteurs de la figure 1. Dans ce cas le capteur 31 comporte deux connecteurs produisant des impulsions de réflexion en plus de la tête sensible 33. Un connecteur d'entrée 32 est relié par un tronçon de fibre optique 34, à un connecteur intermédiaire 37 qui est lui-même relié en série avec la tête sensible 33 par un tronçon de fibre optique 38. Chacun des tronçons de fibre optique 34 et 38 est d'une longueur propre à introduire entre les différentes impulsions le même intervalle de temps élémentaire.

Les signaux produits par des capteurs selon la figure 4 sont illustrés par la figure 5. Sauf en cas de panne sur la ligne 11, ils comportent deux impulsions différentes en provenance des connecteurs 9 et 10, seule l'impulsion 29 du connecteur 10 d'entrée au coupleur 12 ayant été représentée sur la figure. Si la fibre de raccordement entre le coupleur et le capteur n'est pas rompue, on trouve ensuite une impulsion 35 du connecteur d'entrée 32 du capteur. Celle-ci est normalement suivie d'une impulsion 36 provenant du connecteur intermédiaire 37 avant une impulsion de mesure 39 produite par la tête sensible 33. L'impulsion 36 constitue l'impulsion d'état dont la présence témoigne de ce que le capteur est branché et en état de fonctionnement. Elle peut éventuellemnt être utilisée en outre comme impulsion de référence dans des mesures analogiques impliquant une comparaison entre les intensités respectivement de l'impulsion de mesure et de l'impulsion de référence.

Ces signaux sont exploités sous forme numérique par les circuits électroniques incorporés dans le boîtier 5. Comme le montre la figure 1, les signaux reçus successivement après chaque impulsion incidente sont adressés à une série de circuits électroniques propres aux différents capteurs. Après un démultiplexeur 20, ceux-ci comportent pour chaque capteur, une porte 41, qui sous la commande du compteur 7, laisse passer sélectivement les impulsions provenant du capteur correspondant jusqu'à une bascule 42 qui les conserve pour traitement jusqu'à être remise à zéro à l'impulsion incidente suivante. Des circuits d'interface 43 déterminent l'affichage des informations et commandent éventuellement des alarmes avertissant d'un mauvais fonctionnement éventuel des capteurs.

Le traitement des signaux par des tables logiques permet de vérifier pour chaque mot logique correspondant aux signaux reçus d'un capteur unitaire :

1) si l'impulsion de réflexion du connecteur 9 à l'entrée de la ligne 11 est présente à l'instant prévu, son absence témoignant d'une panne à l'émission ;

2) si l'impulsion de réflexion du connecteur 10 à l'entrée du coupleur 12 est présente à l'instant prévu, son absence témoignant d'une panne sur la ligne de transmission 11, soit que celle-ci ne soit pas reliée à la source d'émission de rayonnement soit qu'elle soit rompue sur son trajet ;

3) si l'impulsion dite d'entrée résultant de la réflexion par le connecteur d'entrée du capteur est présente, a son absence signifiant que le capteur n'est pas relié à la ligne 11 ou que la ligne de raccordement entre le coupleur 12 et le capteur est rompue ;

4) si l'impulsion d'état ou de référence 36 provenant du connecteur intermédiaire 37 est ou non présente, son absence indiquant que le capteur n'est pas branché en bout du tronçon de raccordement 15 ou qu'il est cassé intérieurement ;

5) si l'impulsion de mesure 39 produite par la tête sensible est ou non présente, ce qui témoigne par exemple d'une position fermée ou ouverte.

La présence des impulsions 35 et 36 aux instants prévus confirme que le capteur est branché et en état de fonctionnement. L'impulsion 36 étant représentative de l'intensité optique introduite dans le capteur, elle permet de calibrer la réflexion de mesure lors de mesures analogiques. Le résultat recherché est alors obtenu en établissant le rapport d'intensité entre les deux impulsions.

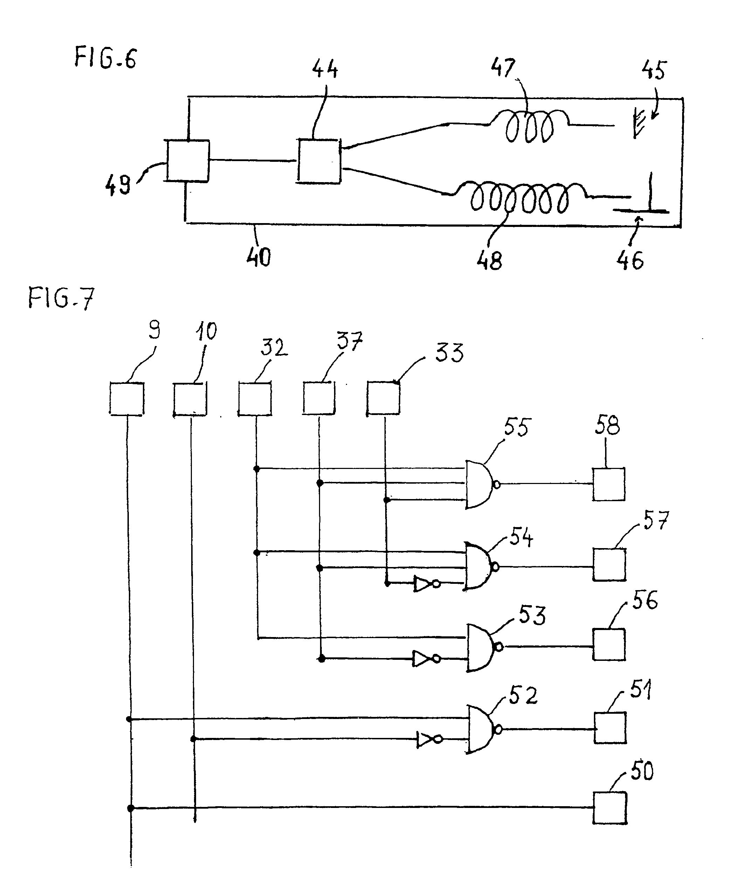

Dans le cas de mesures par "tout ou rien", il suffit de détecter la présence ou l'absence de l'impulsion dite de mesure, et aucune mesure d'intensité n'est effectuée. Les circuits logiques dont on a précisé la finalité ci-dessus peuvent être construits conformément à la figure 7. Les différents signaux en provenance des connecteurs 9, 10, 32, de l'élément de référence et de l'élément de mesure servent à déterminer l'allumage ou l'extinction de différentes diodes appartenant à un dispositif d'affichage. Chaque diode est placée sous la commande d'un transistor (non représenté) dont l'état conducteur ou non est déterminé à partir des signaux ci-dessus.

La diode 50, dont le conducteur est directement commandé par le signal du connecteur 9, s'allume en cas de panne à l'émission. La diode 51, à la sortie d'une porte NON-ET 52 recevant le signal du connecteur 9 et, après inversion, le signal du connecteur 10, signale une panne sur la ligne principale quand elle s'allume.

Les autres portes 53, 54, 55 se retrouvent autant de fois qu'il y a de capteurs reliés au coupleur de la ligne principale. La porte NON-ET 52 reçoit l'impulsion du connecteur d'entrée 32 et l'impulsion inversée du connecteur intermédiaire 37 pour commander l'allumage d'une diode 56 en cas de panne avant l'élément de référence. Cette dernière témoigne donc de l'état (bon fonctionnement)/panne. Les portes NON-ET 54 et 55, recevant les deux signaux des connecteurs 32 et 37, plus le signal de la tête sensible 33 respectivement avec et sans inversion commande l'affichage de la mesure, par allumage de la diode 57 (résultat négatif "rien") ou de la diode 58 (résultat positif "tout").

La figure 6 représente un capteur selon l'invention dans un autre mode de réalisation. Ce capteur 40 peut être avantageusement utilisé, soit en capteur unitaire, soit pour constituer différents capteurs du dispositif de la figure 1.

Le capteur 40 comporte, en plus de l'élément sensible 46 qui produit par réflexion l'impulsion de mesure comme dans les cas précédents, un élément de référence 45 constitué de manière analogue, avec un dispositif réfléchissant (miroir ou rétro-réflecteur) en bout d'une fibre optique, sauf que cet élément de référence est insensible à la grandeur à mesurer. Cet élément de référence produit donc par réflexion une impulsion de référence à laquelle l'impulsion de mesure peut être comparée, sous réserve que ces deux impulsions soient distinguées dans le temps dans les signaux cumulés revenant au boîtier de traitement électronique.

A cet effet le capteur 40 comporte, après un connecteur d'entrée 49, un coupleur 44 répartissant le flux lumineux dans deux bras qui sont reliés respectivement à l'élément de référence 45 et à l'élément de mesure 46 par deux tronçons de fibres différents 47 et 48.

Les deux tronçons de fibres 47 et 48 présentent des longueurs déterminées l'une double de l'autre, de telle sorte que dans le impulsions produites par réflexion, l'impulsion de référence est retardée par rapport à l'impulsion du connecteur d'entrée 49 d'un intervalle de temps élémentaire, alors que l'impulsion de mesure est retardée par rapport à cette même impulsion du connecteur d'entrée de deux intervalles de temps élémentaires.

Les signaux revenant au dispositif de traitement électronique comportent alors, comme sur la figure 5, une impulsions du connecteur d'entrée distinguée de l'impulsion de référence dont la présence ou l'absence indique si le capteur est ou non branché et en état de fonctionnement, étant entendu que l'information de mesure obtenue peut résulter soit de la présence ou de l'absence de l'impulsion, soit d'un rapport d'intensité entre l'impulsion de mesure et l'impulsion de référence.

Quand ce capteur est utilisé dans le dispositif de la figure 1, l'impulsion du connecteur d'entrée constitue l'impulsion d'état : quand elle est présente après l'impulsion du connecteur 10 du coupleur 12, à l'instant normal correspondant au délai introduit par le tronçon 15 correspondant, ceci témoigne de ce que le capteur est branché sur le coupleur.

## Revendications

1. Dispositif de détection à fibres optiques fonctionnant en lumière incohérente, comportant au moins un capteur (1) comportant un élément sensible fonctionnant par réflexion de lumière en bout d'une fibre optique, et une ligne de transmission lumineuse par fibres optiques (11) reliant ledit capteur à une source d'émission d'impulsions lumineuses périodiques (6) et à un ensemble (5) de détection et de traitement des signaux produits par réflexion desdites impulsions dans le capteur, le capteur (1) comportant un tronçon de fibre optique (4) de longueur déterminée entre un connecteur intermédiaire (2, 22, 37) produisant par réflexion une impulsion d'état et ledit élément sensible (3), ce dernier produisant une impulsion de mesure qui est ainsi séparée de l'impulsion d'état d'au moins un intervalle de temps élémentaire, lesdits moyens électroniques étant adaptés à déceler l'état de fonctionnement du capteur par la présence ou l'absence de ladite impulsion d'état dans lesdits signaux et à produire un signal de panne en son absence.

2. Dispositif selon la revendication 1, caractérisé en ce que le capteur comporte en outre un tronçon de fibre optique (34) de longueur déterminée entre ledit connecteur intermédiaire constituant un connecteur intermédiaire interne (37) et produisant une impulsion d'état et un connecteur d'entrée (32) produisant, par réflexion, une impulsion d'entrée distinguée dans le temps de l'impulsion d'état et de l'impulsion de mesure en lumière incohérente.

3. Dispositif selon la revendication 1 ou 2, caractérisé en ce que ledit connecteur intermédiaire est calibré pour produire une impulsion de référence représentative de l'intensité optique véhiculée dans le tronçon de fibre, utilisable pour une mesure analogique d'intensité de l'impulsion de mesure en lumière incohérente.

4. Dispositif selon la revendication 2, caractérisé en ce que la longueur de fibre optique séparant le connecteur d'entrée (32) du connecteur intermédiaire (37) est choisie pour introduire, entre les impulsions correspondantes, le même intervalle de temps élémentaire qu'entre le connecteur intermédiaire et l'élément sensible, ou un intervalle de temps multiple de cet intervalle de temps élémentaire.

5. Dispositif selon l'une quelconque des revendications 1 à 4, caractérisé en ce que la longueur de fibre séparant ledit connecteur intermédiaire de l'élément sensible est choisie de sorte que l'intervalle de temps élémentaire soit faible en regard de la période des impulsions émises par la source, et supérieur à la durée de chacune des impulsions émises par la source.

6. Dispositif selon la revendication 1 ou 2, caractérisé en ce que ledit capteur comporte un élément de référence fonctionnant par réflexion en bout d'une fibre optique, et en ce que ledit élément de référence (45) et ledit élément sensible (46) sont reliés séparément audit connecteur intermédiaire (49) par des tronçons de fibres optiques (47, 48) de longueurs différentes.

7. Dispositif selon la revendication 6, caractérisé en ce que lesdites longueurs différentes sont choisies pour introduire entre l'impulsion du connecteur intermédiaire (49), d'une part une impulsion de référence produite par l'élément de référence, et d'autre part l'impulsion de mesure, des retards égaux chacun à un multiple dudit intervalle de temps élémentaire.

8. Dispositif selon l'une quelconque des revendications 1 à 7, comportant plusieurs capteurs tels que définis dans ces revendications, caractérisé en ce qu'il comporte un coupleur (12) pour relier ladite ligne de transmission (11) séparément aux différents capteurs (1) et en ce qu'il comporte, des tronçons de fibre optique (15) assurant la transmission entre ledit coupleur (12) et les différents capteurs, lesdits tronçons (15) présentant des longueurs déterminées propres à chaque capteur introduisant des retards différents entre une impulsion de réflexion produite par un connecteur d'entrée (10) du coupleur (12) et les impulsions des connecteurs intermédiaires (2, 22, 37) des capteurs.

9. Dispositif selon la revendication 8, caractérisé en ce que lesdits retards sont chacun égal à un multiple dudit intervalle de temps élémentaire.

10. Dispositif selon la revendication 8 ou 9, caractérisé en ce que lesdits moyens électroniques sont adaptés à produire à la fois :
— tout d'abord, une information de panne ou non du dispositif d'émission suivant la présence ou l'absence d'une impulsion réfléchie à l'entrée de ladite ligne (11) ;
— puis, une information de panne ou non de ladite ligne (11) suivant l'absence ou la présence d'une impulsion réfléchie à l'extrémité de ladite ligne (11), par un connecteur d'entrée (10) du coupleur ;
— une information de panne ou non du coupleur (12) suivant l'absence ou la présence d'une impulsion réfléchie par un connecteur d'entrée (32) du capteur ;
— enfin, une information de panne ou non du capteur, panne pouvant aussi être le non-raccordement du capteur au coupleur, suivant l'absence ou la présence d'une impulsion d'état réfléchie par ledit connecteur intermédiaire (37) ou d'une impulsion de référence réfléchie par ledit connecteur intermédiaire (37) ou par ledit élément de référence (45).

**Patentansprüche**

1. Faseroptischer, mit inkohärentem Licht arbeitender Detektor, der wenigstens einen Fühler (1) umfaßt, welcher seinerseits ein lichtempfindliches Element, dessen Funktion auf der Lichtreflexion am Ende einer optischen Faser beruht, sowie eine faseroptische Lichtübertragungsleitung (11) umfaßt, welche besagten Fühler mit einer Quelle periodischer Lichtimpulse (6) sowie mit einer Einheit (5) für die Erfassung und die Verarbeitung der durch die im Fühler stattfindende Reflexion besagter Impulse hervorgerufenen Signale verbindet, wobei der Fühler (1) einen Strang optischer Fasern (4) von bestimmter Länge zwischen einem durch Reflexion einen Zustandsimpuls hervorrufenden Zwischenverbinder (2, 22, 37) und den lichtempfindlichen Element (3) umfaßt, wobei letzteres einen Meßimpuls abgibt, der durch wenigstens ein Grundzeitintervall vom Zustandsimpuls getrennt ist und wobei besagte elektronische Einheit geeignet ist, den Funktionszustand des Fühlers aufgrund des Vorhandenseins bzw. des Nichtvorhandenseins besagten Zustandsimpulses in besagten Signalen zu ermit teln und im Falle des Nichtvorhandenseins ein Störungssignal hervorzurufen.

2. Detektor nach Anspruch 1, dadurch gekennzeichnet, daß der Fühler außerdem einen Strang optischer Fasern (34) von bestimmter länge zwischen besagtem Zwischenverbinder, bei welchem es sich um einen internen Zwischenverbinder (37) handelt, der einen Zustandsimpuls abgibt, sowie einen Eingangsverbinder (32) umfaßt, der durch Reflexion einen Eingangsimpuls abgibt, dessen Zeittakt sich von dem der Zustands- und Meßimpulse aus inkohärentem Licht unterscheidet.

3. Detektor nach Anspruch 1 oder 2, dadurch gekennzeichnet, daß besagter Zwischenverbinder derart geeicht ist, daß er einen Impuls abgibt, der einen repräsentativen Referenzwert der optischen Intensität darstellt, welche durch den Faserstrang übertragen wird und für eine Analogmessung der Intensität des Inkohärenzlichtmeßimpulses verwendbar ist.

4. Detektor nach Anspruch 2, dadurch gekennzeichnet, daß die Länge der optischen Fasern, welche den Eingangsverbinder (32) vom Zwischenverbinder (37) trennen, derart gewählt wird, daß zwischen den entsprechenden Impulsen dasselbe Grundzeitintervall wie zwischen dem Zwischenverbinder und dem lichtempfindlichen Element oder ein Mehrfaches des Grundzeitintervalls liegt.

5. Detektor nach einem der Ansprüche 1 bis 4, dadurch gekennzeichnet, daß die Länge der Fasern, welche besagten Zwischenverbinder vom lichtempfindlichen Element trennen, derart gewählt wird, daß das Grundzeitintervall den Zeittakt der von der Quelle ausgesandten Impulse unterschreitet und die Dauer eines jeden von der Quelle ausgehenden Impulses überschreitet.

6. Detektor nach Anspruch 1 oder 2, dadurch gekennzeichnet, daß besagter Fühler ein Referenzelement umfaßt, das mit Reflexion am Ende einer optischen Faser arbeitet, sowie dadurch gekennzeichnet, daß tesagtes Referenzelement (45) und besagtes lichtempfindliches Element (46) durch unterschiedlich lange Optikfaserstränge (47, 48) unabhängig voneinander mit besagtem Zwischenverbinder (49) verbunden sind.

7. Detektor nach Anspruch 6, dadurch gekennzeichnet, daß besagte unterschiedliche Längen derart gewählt werden, daß zwischen die Impulse des Zwischenverbinders (49) einerseits ein vom Referenzelement hervorgerufener Referenzimpuls und andererseits ein Meßimpuls mit Verzögerungen eingeschoben werden, welche, jeweils einem Mehrfachen des besagten Grundzeitintervalls entsprechen.

8. Detektor nach einem der Ansprüche 1 bis 7, welche mehrere gemäß besagten Ansprüchen beschriebene Fühler umfaßt, dadurch gekennzeichnet, daß er ein Koppelglied (12) umfaßt, die besagte Übertragungsleitung (11) unabhängig mit den verschiedenen Fühlern (1) verbindet, sowie ferner dadurch gekennzeichnet, daß er optische Faserstränge (15) umfaßt, welche die Übertragung zwischen besagtem Koppelglied (12) und den verschiedenen Fühlern sicherstellt, wobei besagte Stränge (11) unterschiedliche Längen aufweisen, und zwar je nach dem jeweiligen Fühler, welcher zwischen einem vom Eingangsverbinder (10) des Fühlers (12) abgegebenen Reflexionsimpuls und den Impulsen des Zwischenverbinders (2, 22, 37) der Fühler unterschiedliche Verzögerungen einschiebt.

9. Detektor nach Anspruch 8, dadurch gekennzeichnet, daß besagte Verzögerungen einem Mehrfachen des besagten Grundzeitintervalls entsprechen.

10. Detektor nach Anspruch 8 oder 9, dadurch gekennzeichnet, daß die besagten elektronischen Einrichtungen geeignet sind, folgendes gleichzeitig abzugeben :

— zunächst eine Information über eine bestehende bzw. nicht bestehende Störung der Emissionsvorrichtung je nach Vorhandensein bzw.

Nichtvorhandensein eines am eingang der besagten Leitung (11) reflektierten Impulses ;

— als nächstes eine Information über das Vorhandensein bzw. Nichtvorhandensein einer Störung besagter Leitung. (11) je nach Vorhandensein bzw. Nichtvorhandensein eines am Ende der besagten Leitung (11) mittels eines Eingangsverbinders (10) des Koppelgliedes reflektierten Impulses ;

— eine Information über das Vorhandensein bzw. Nichtvorhandensein einer Störung an dem Koppelglied (12) je nach Vorhandensein bzw. Nichtvorhandensein eines am Eingangsverbinder (32) des Fühlers reflektierten Impulses ;

— schließlich eine Information über das Vorhandensein bzw. Nichtvorhandensein einer Störung am Fühler, wobei die Störung auch eine nicht bestehende Verbindung zwischen Fühler und Koppelglied sein kann, je nach Vorhandensein bzw. Nichtvorhandensein eines durch den besagten Zwischenverbinder (37) reflektierten Zustandsimpulses oder eines durch den besagten Zwischenverbinder (37) oder durch das Referenzelement (45) reflektierten Referenzimpulses.

## Claims

1. An optical fibre detection device operating with incoherent light and comprising at least one pick-up (1) comprising a sensitive element which operates by reflection of light at the end of an optical fibre and also comprising an optical-fibre light transmission line (11) connecting the pick-up to a source (6) emitting periodic light pulses and to an assembly (5) for detecting and processing signals produced by reflection of the pulses in the pick-up, the pick-up (1) comprising an optical fibre portion (4) of given length between the sensitive element (3) and an intermediate connector (2, 22, 37) which produces a state pulse by reflection, the sensitive element (3) producing a measurement pulse which is thus separated from the state pulse by at least one elementary time interval, the electronic means being adapted to detect the state of operation of the pick-up through the presence or absence of the state pulse in the signals, and to produce a breakdown signal if the state pulse is absent.

2. A device according to claim 1, characterised in that the pick-up also comprises an optical fibre portion (34) of given length between the intermediate connector, which constitutes an internal intermediate connector (37) and produces a state pulse, and an input connector (32) which by reflection produces an input pulse which is distinct in time from the state pulse and from the incoherent-light measurement pulse.

3. A device according to claim 1 or 2, characterised in that the intermediate connector is calibrated to produce a reference pulse representing the optical intensity conveyed in the fibre portion and of use for analog measurement of the intensity of the incoherent-light measurement pulse.

4. A device according to claim 2, characterised in that the length of optical fibre separating the input connector (32) from the intermediate connector (37) is chosen so that the elementary time interval between corresponding pulses is the same as between the intermediate connector and the sensitive element or is a multiple of that elementary time interval.

5. A device according to any of claims 1 to 4, characterised in that the length of fibre separating the intermediate connector from the sensitive element is chosen so that the elementary time interval is small compared with the period of the pulses emitted by the source and is greater than the duration of each pulse emitted by the source.

6. A device according to claim 1 or 2, characterised in that the pick-up comprises a reference element operating by reflection at the end of an optical fibre, and in that the reference element (45) and the sensitive element (46) are separately connected to the intermediate connector (49) by optical fibre portions (47, 48) of different lengths.

7. A device according to claim 6, characterised in that the different lengths are chosen so as to introduce delays each equal to a multiple of the elementary time interval between, on the one hand, the pulse from the intermediate connector (49) and a reference pulse produced by the reference element, and on the other hand between the pulse from the intermediate connector (49) and the measurement pulse.

8. A device according to any of claims 1 to 7, comprising a number of pick-ups as defined in these claims, the device being characterised in that it comprises a coupler (12) for connecting the transmission line (11) to the various pickups (1) separately, and in that it comprises optical fibre portions (15) for transmission between the coupler (12) and the various pick-ups, the portions (15) having given lengths specific to each pick-up so as to introduce different delays between a reflected pulse produced by an input connector (10) of the coupler (12) and pulses from the intermediate connectors (2, 22, 37) of the pick-ups.

9. A device according to claim 8, characterised in that the delays are each equal to a multiple of the elementary time interval.

10. A device according to claim 8 or 9, characterised in that the electronic means are adpated to produce the following simultaneously :

— firstly, information on whether the emission device has broken down or not, depending on the presence or absence of a reflected pulse at the input of the line (11) ;

— next, information on whether the line (11) has broken down or not, depending on the absence or presence of a reflected pulse at the end of line (11), by an input connector (10) of the coupler ;

— information on whether the coupler (12) has broken down or not, depending on the absence or presence of a pulse reflected by an input connector (32) of the pick-up ; and

— finally, information on whether the pick-up has broken down or not (or has not been connected to the coupler), depending on the absence or presence of a state pulse reflected by the intermediate connector (37) or a reference pulse reflected by the intermediate connector (37) or by the reference element (45).

FIG-1

FIG-2

FIG-3

FIG.4

FIG.5

FIG.6

FIG.7